# EUROPEAN PATENT APPLICATION

(11) **EP 3 819 190 A1**
(43) Date of publication of application: **12.05.2021**
(21) Application number: 19208306.1
(22) Date of filing: 11.11.2019
(51) Int. Cl.: B62D 5/04

(54) **STEER-BY-WIRE ACTUATION SYSTEM**

(71) Applicant: National Electric Vehicle Sweden AB, 461 38 Trollhättan (SE)
(72) Inventor: ENGSTRÖM, Per, 461 38 TROLLHÄTTAN (SE); ABDULLAH, Loai, 461 38 TROLLHÄTTAN (SE); HANSSON, Vilhelm, 461 38 TROLLHÄTTAN (SE); HEKIMOGLU, Tayfun, 461 57 TROLLHÄTTAN (SE); JIDETOFT, Kristoffer, 461 91 TROLLHÄTTAN (SE); JOHANSSON, Magnus, 461 38 TROLLHÄTTAN (SE); JÖNSSON, Ida, 461 38 TROLLHÄTTAN (SE); LEXT, Torbjörn, 461 38 TROLLHÄTTAN (SE); LI, Thomas, LONDON, W4 4BQ (GB); SIKSTRÖM, Moa, 451 44 UDDEVALLA (SE); TÄHKÄNEN, Thomas, 451 98 UDDEVALLA (SE)
(74) Representative: AWA Sweden AB

(57) **Abstract**

The present invention relates to a steer-by-wire actuation system for a motorised vehicle comprising: at least two electrical steering motors each comprising a rotor (8a, 8b) and a stator (11a, 11b); a vehicle control unit (VCU), configured to receive a steering command from an input steering device; at least two steering electronic control units (ECU) for controlling a torque or rotational speed output from said at least two electrical motors. The system further comprises: a ball screw (5) and a cooperating ball screw nut (21); and a concentric shaft (7) accommodating said ball screw (5) and a cooperating ball screw nut (21), wherein said at least two rotors (8a, 8b) are adapted to transfer torque and rotational speed to said concentric shaft (7), and wherein said ball screw nut (21) is mechanically connected to said concentric shaft (7), so as to translate the rotational movement from the rotors to a linear reciprocating steering movement of the ball screw (5).

## Description

### Technical field

The present invention relates to a steer-by-wire actuation system for a vehicle.

### Background of the invention

In conventional steering systems, hydraulic or electric subsystems provides power assistance to support the driver's steering input. In addition, there is a mechanical interface between the driver and the steering gear. In general, vehicle design is constrained due to the limited packaging space available for steering components which are attached between the steering wheel and the steering gear.

Automotive steer-by-wire systems may eliminate the mechanical interface between the steering wheel and the steering gear, therefore negating some of the packaging constraints. However, the requirements for steer-by-wire systems are more challenging than for conventional steering systems due to the legislative system requirements in the event of failure. A steer-by-wire system shall therefore be designed to be operational under the failure of one or more of the sub-components, controller signals or power supplies, such that fail-operational redundancy is achieved. In the current state of the art, solutions aimed at achieving the above mentioned redundancy often require a lot of components, resulting in the steer-by-wire system being as bulky as a conventional system.

Therefore, there is a need for a new steer-by-wire actuation system that combines redundancy with packaging efficiency.

### Summary of the invention

An object of the present invention is to provide a steer-by-wire actuation system that provides redundancy but requires less volume thatn prior application. The invention is based on the inventors' insight that by providing a configuration with a ball screw and ball screw nut together with a concentric shaft a compact solution may be achieved.

According to a first aspect of the present invention, a steer-by-wire actuation system for a motorised vehicle is provided, said system comprising: at least two electrical steering motors each comprising a rotor and a stator, a vehicle control unit (VCU), configured to receive a steering command from an input steering device, at least two steering electronic control units (ECU) for controlling a torque or rotational speed output from said at least two electrical motors, characterized in that the system further comprises: a ball screw and a cooperating ball screw nut, and a concentric shaft accommodating said ball screw and a cooperating ball screw nut, wherein said at least two rotors are adapted to transfer torque and rotational speed to said concentric shaft, and wherein said ball screw nut is mechanically connected to said concentric shaft, so as to translate the rotational movement from the rotors to a linear reciprocating steering movement of the ball screw.

A steer-by-wire actuation system is to be understood as a system where the input signal from a steering or control device, such as a steering wheel or a joystick, is completely electrically transmitted to a steering actuation unit, i.e. there is no mechanical connection between a steering or control device and a steering actuation unit.

A motorised vehicle may in some embodiments be an electric vehicle.

That the concentric shaft accommodates the ball screw is to be understood as at least a portion of the ball screw being arranged in mechanical contact with the concentric shaft. That the shaft is concentric entails that it is arranged around and along the ball screw. In addition, as shown and described later in the specification, other components may also be concentrically arranged with the concentric shaft, e.g. the rotors and ball screw nut and bearings.

An electrical steering motor is to be understood as an electrical motor used for providing torque and rotational speed to a steering mechanism.

By having a concentric shaft accommodating the ball screw, upon which shaft the at least two electrical motors act directly upon, a more compact steering actuator is achieved.

According to one embodiment, the system comprises a main bearing inner ring, press-fitted onto the concentric shaft.

According to one embodiment, the system comprises a secondary bearing inner ring, press-fitted onto the concentric shaft. Hereby, the bearing will hold the concentirc shaft in place and allow rotation but avoid radial movements. Further, the beaing my hereby be arranged by means of a fast assamly method without any need for adhesives or welding.

According to one embodiment, the input control or steering device is a steering wheel electrically connected to the vehicle control unit (VCU).

That the input control or steering device is electrically connected to the vehicle control unit (VCU) means that there is no mechanical connection between them.

According to one embodiment, the rotors of the at least two electrical motors are separated by a rotor sleeve.

By separating the stators by a rotor sleeve, the operation of the at least two rotors are kept independent and at a constant distance.

According to one embodiment, the stators of the at least two electrical motors are separated by a stator sleeve.

By separating the stators by a stator sleeve, the operation of the at least two stators are kept independent and at a constant distance.

According to one embodiment, the system comprises a sliding bushing adapted to spatially fixate a longitudinal axis of said ball screw while allowing movement of said ball screw along said axis.

That the sliding bushing fixates a longitudinal axis of the ball screw entails that the ball screw does not tilt, rotate or otherwise move around the longitudinal axis.

According to one embodiment, the system comprises at least one temperature sensor or at least one ball screw centre position sensor or at least one electrical steering motor position sensor.

By providing the system with sensors, the functionality may be optimized by using the information derived from the sensors.

According to a secondary aspect of the present invention, a method for actuating a steering mechanism in case of an electrical steering motor failure is provided, said method comprising: providing a steer-by-wire actuation system; setting a value for the torque and rotational speed output for each electrical motor; detecting a deviation in the torque or rotational speed output of a first electrical steering motor; compensating said deviation of torque or rotational speed output of said first electrical steering motor by setting a new value for the torque and rotational speed output of a second electrical steering motor.

By having more than one motor actuating the same steering mechanism by mechanically engaging with the same concentric shaft that is connected to the ball screw, a compact and redundant steer-by-wire system is achieved.

According to one embodiment, said at least two electrical steering motors are at least three electrical steering motors, and wherein compensating said deviation of torque or rotational speed output of said first electrical steering motor comprises setting a new value for the torque or rotational speed output for both a second and a third electrical steering motor.

By increasing the quantity of motors in the system, an even higher degree of redundancy is achieved, making the system even safer.

According to one embodiment, detecting a deviation in the torque and rotational speed output of one of the electrical motors comprises measuring a temperature or a ball screw center position or an electrical steering motor position.

### Brief description of the drawings

Further details and aspect of the present invention will become apparent from the following detailed description with reference to accompanying drawings, in which:
FIG. 1 is an exploded view to describe assembly instructions;
FIG. 2 is a section view to show a schematic configuration of the steering actuator;
FIG. 3 is a schematic functional block diagram of the invention to describe the control methodology.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

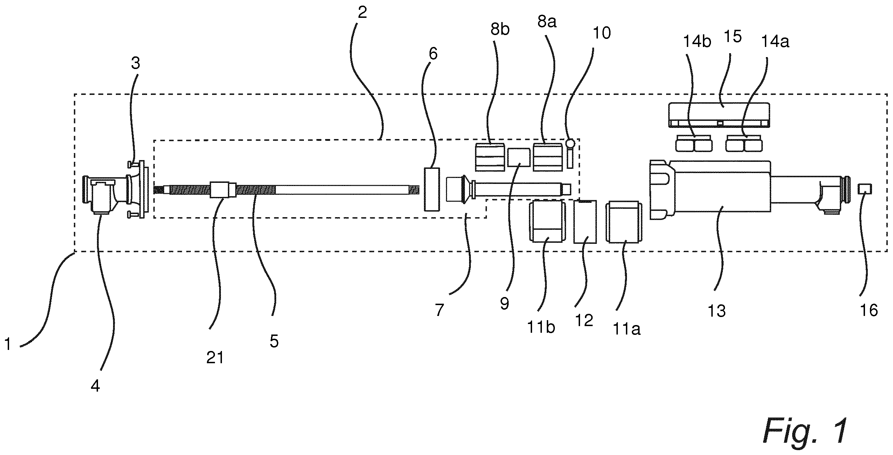

As shown in FIGS. 1-2, the fail operational steer-by-wire actuator system is generally designated by the reference number 1.

Fig. 1 shows an exploded view of the steer-by-wire actuator system. The actuator 1 comprises multiple electric motors 100a, 100b which are the only and primary steering torque sources. Here, the rotors 8a, 8b and stator 11a, 11b of the electrical motors 100a, 100b are shown separately. The concentric shaft 7 is a linkage element for the rotating parts comprising the rotors 8a, 8b, rotor sleeve 9, main bearing 6 inner ring and secondary bearing 10 inner ring. The ball screw nut 21 has its own threads to be fixed to the concentric shaft 7 that contains a threaded hole. The steering mechanism 2 comprise the ball screw 5 and ball screw nut 21, main bearing 6, concentric shaft 7, rotors 8a, 8b, rotor sleeve 9 and secondary bearing 10.

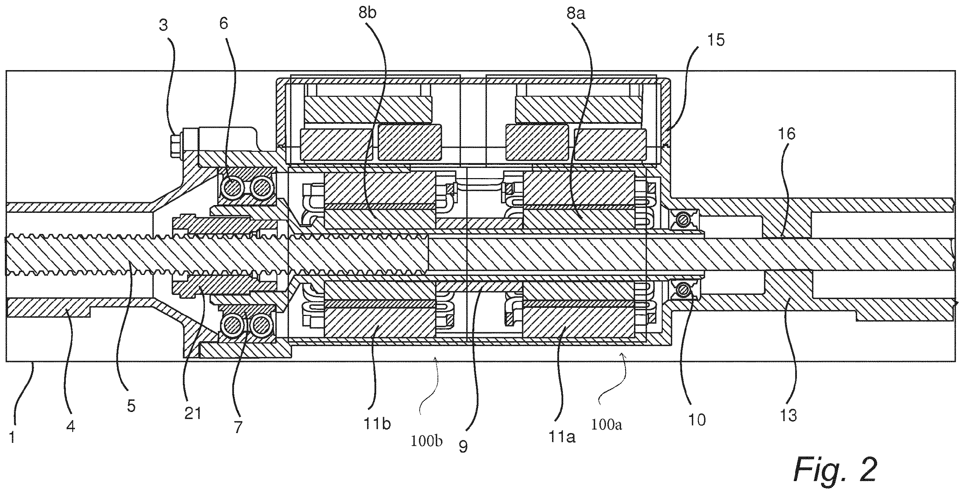

In the figure, the pieces are illustrated in an exploaded view, in order to illustrate them seperately. As is further illustrated in figure 2, the pieces are sized and adapted to be concentrically arranged so as to form a compact steering mechanism.

Fig. 2 shows all the components in Fig. 1 put together into a compact, working device. The rotors 8a, 8b are press-fitted onto the concentric shaft 7 and axially separated by the rotor sleeve 9 which is press-fitted onto the concentric shaft 7 between the rotors 8a, 8b.

The main bearing 6 inner ring and secondary bearing 10 inner ring are press-fitted to the concentric shaft 7 as well from each end of the concentric shaft 7.

In this example, the stators 11a, 11b are press-fitted to the inner periphery of the housing 13 by separation of stator sleeve 12 which is press-fitted to the housing 13 between stators 11a, 11b. The steering mechanism 2 is fixed into the housing 13, by press-fitting the main bearing 6 outer ring to the housing 13 and by having an interference fit between the secondary bearing 10 outer ring and housing 13. The main bearing 6 and secondary bearing 10 provide rotational support to the steering mechanism 2. The ball screw 5 which is the main mechanical steering mechanism element is supported by a sliding bushing 16 provided separately or in gear housing 13, so as to be able to reciprocate in the axial direction. The steering mechanism 2 and ball screw 5 shall be aligned in such a way that the rotors 8a, 8b shall not touch the stators 11a, 11b during operation.

Multiple steering electronic control units (SECU) 14a, 14b are attached into the lid 15 and the lid 15 is attached to the housing 13 by screws. Multiple power connectors and multiple signal connectors are used in order to have the fail operational actuator packaged inside of the lid 15. The SECU 14a, 14b is connected to the electric motor stator 11a, 11b via cables connected to the electric motor 100a, 100b.

The steering actuator 1 further comprises ball screw position sensors 19a, 19b, electric motor temperature sensors 17a, 17b, ball screw center position sensor 18 and electric motor position sensors 20a, 20b. The SECU 14a, 14b also has the ability to calculate the temperature and rotor position of the electric motor 100a, 100b, but in order to increase the redundancy level of the system, a temperature sensor 17a, 17b is used for each electric motor to measure the temperature from the stator 11a, 11b. The temperature sensor 17a, 17b is an optional element based on temperature calculation accuracy of the SECU 14a, 14b. Since the motion ratio between the electric motors 100a, 100b and ball screw 5 is defined by the physical geometry of its design, the SECU 14a, 14b has the ability to calculate the position of electric motor 100a, 100b at all times and instances of operation. To increase the redundancy level of the system, the ball screw position sensors 19a, 19b, the ball screw center position sensor 18 and the electric motor position sensors 20a, 20b are mounted on the housing 13. The SECU 14a, 14b has on-board ports for all dedicated sensors.

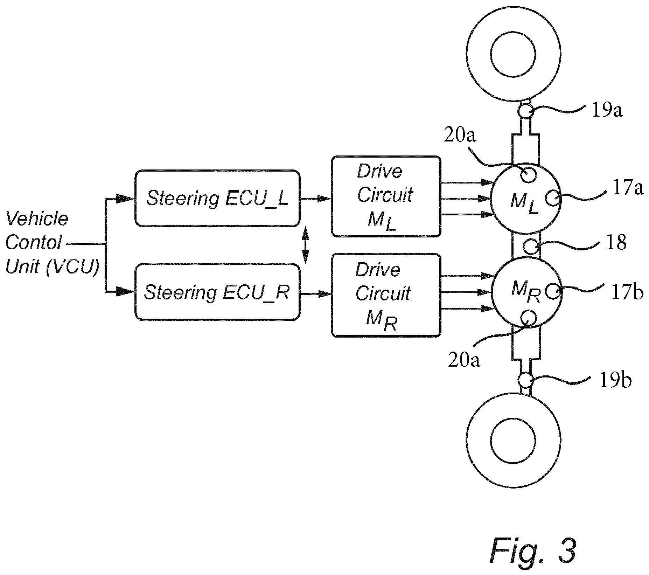

Fig. 3 illustrates a schematic functional block diagram of a steering with the steer-by-wire actuator is shown. The VCU sends the command to the SECU 14a, 14b via a communication bus line which has a signal connector socket and power connector socket on-board. The SECU 14a, 14b processes the command and sends the required speed and current information to the multiple electric motors 100a, 100b by three cables. The electric motors 100a, 100b convert the current and transmit the resulting rotational torque (and speed) through the rotors 8a, 8b, to the concentric shaft 7 (which is mounted to the housing 13 with the main bearing 6 and secondary bearing 10). Since the concentric shaft 7 is tightened to the ball screw, the torque transmission is carried out without any losses.

The ball screw nut 21 is a revolute joint element in the steering actuator 1, it rotates at the desired speed and torque without any transverse motion. The rotational torque is converted to transverse force on ball screw 5 by action of the ball screw 5 working principle. The fixed attachment between ball screw 5, rack adapter 2 and steering tie-rod 1 ensures the steering force is relayed to the road wheels to steer the vehicle.

The steering actuator 1 is a fully redundant fail operational actuator. The system has multiple power supplies, multiple SECUs 14a, 14b, multiple communication bus lines and multiple power lines. The system also has multiple electric motors 100a, 100b, optional ball screw position sensor(s) 19a, 19b, optional electric motor temperature sensor(s) 17a, 17b, optional ball screw center position sensor(s) 18 and optional electric motor position sensor(s) 20a, 20b.

The redundancy of the mechanical sub-components such as ball screw, concentric shaft, steering tie-rods etc. is provided by employing sufficient safety factors when dimensioning the critical parameters, in accordance with global automotive legislation and engineering best practice.

Although exemplary embodiments of the present invention have been shown and described, it will be apparent to the person skilled in the art that a number of changes and modifications, or alterations of the invention as described herein may be made. Moreover, the different embodiments described above may be combined in different ways without departing from the scope of the inventive concept. Thus, it is to be understood that the above description of the invention and the accompanying drawing is to be regarded as a non-limiting example thereof and that the scope of the invention is defined in the appended patent claims.

## Claims

1. A steer-by-wire actuation system for a motorised vehicle comprising:
- at least two electrical steering motors each comprising a rotor (8a, 8b) and a stator (11a, 11b);
- a vehicle control unit (VCU), configured to receive a steering command from an input steering device;
- at least two steering electronic control units (ECU) for controlling a torque or rotational speed output from said at least two electrical motors;
**characterized in that** the system further comprises:
- a ball screw (5) and a cooperating ball screw nut (21); and
- a concentric shaft (7) accommodating said ball screw (5) and a cooperating ball screw nut (21), wherein said at least two rotors (8a, 8b) are adapted to transfer torque and rotational speed to said concentric shaft (7), and wherein said ball screw nut (21) is mechanically connected to said concentric shaft (7), so as to translate the rotational movement from the rotors to a linear reciprocating steering movement of the ball screw (5).

2. The steer-by-wire actuation system according to claims 1, comprising a main bearing inner ring (6), press-fitted onto the concentric shaft (7).

3. The steer-by-wire actuation system according to any one of claims 1-2, comprising a secondary bearing inner ring (10), press-fitted onto the concentric shaft (7).

4. The steer-by-wire actuation system according to any preceding claim, wherein the input steering device is a steering wheel electrically connected to the vehicle control unit (VCU).

5. The steer-by-wire actuation system according to any preceding claims, wherein said rotors (8a, 8b) of the at least two electrical motors are separated by a rotor sleeve (9).

6. The steer-by-wire actuation system according to any preceding claim, wherein said stators (11a, 11b) of the at least two electrical motors are separated by a stator sleeve (12)

7. The steer-by-wire actuation system according to any preceding claim, further comprising a sliding bushing (16) adapted to spatially fixate a longitudinal axis of said ball screw (5) while allowing movement of said ball screw (5) along said axis.

8. The steer-by-wire actuation system according to any preceding claim, further comprising at least one temperature sensor or at least one ball screw centre position sensor or at least one electrical steering motor position sensor.

9. Method for actuating a steering mechanism in case of an electrical steering motor failure, said method comprising:
- providing a steer-by-wire actuation system according to claim 1;
- setting a value for the torque and rotational speed output for each electrical motor;
- detecting a deviation in the torque or rotational speed output of a first electrical steering motor;
- compensating said deviation of torque or rotational speed output of said first electrical steering motor by setting a new value for the torque and rotational speed output of a second electrical steering motor.

10. The method according to claim 9, wherein said at least two electrical steering motors are at least three electrical steering motors, and wherein compensating said deviation of torque or rotational speed output of said first electrical steering motor comprises setting a new value for the torque or rotational speed output for both a second and a third electrical steering motor.

11. The method according to claim 9, wherein detecting a deviation in the torque and rotational speed output of one of the electrical motors comprises measuring a temperature and/or a ball screw position and/or an electrical steering motor position and/or an electrical motor output torque.
